(19) Europäisches Patentamt / European Patent Office / Office européen des brevets

(11) **EP 3 960 418 A1**

(12) **EUROPEAN PATENT APPLICATION**
published in accordance with Art. 153(4) EPC

(43) Date of publication:
**02.03.2022 Bulletin 2022/09**

(21) Application number: **20796428.9**

(22) Date of filing: **21.04.2020**

(51) International Patent Classification (IPC):
*B29C 45/14* (2006.01)    *B32B 27/00* (2006.01)
*B32B 27/30* (2006.01)    *B32B 27/32* (2006.01)
*B32B 3/30* (2006.01)

(52) Cooperative Patent Classification (CPC):
**B32B 3/30; B29C 45/14**

(86) International application number:
**PCT/JP2020/017211**

(87) International publication number:
**WO 2020/218300 (29.10.2020 Gazette 2020/44)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(30) Priority: **23.04.2019  JP 2019081929**

(71) Applicant: **Toppan Printing Co., Ltd.**
**Tokyo 110-0016 (JP)**

(72) Inventor: **SANO, Mamiko**
**Tokyo 110-0016 (JP)**

(74) Representative: **TBK**
**Bavariaring 4-6**
**80336 München (DE)**

(54) **DECORATIVE SHEET**

(57)    Provided is a decorative sheet that maintains an uneven pattern and a matte texture on a surface of the decorative sheet even after molding, and that has excellent formability and chemical resistance. The decorative sheet (1) according to the present embodiment comprises a transparent resin layer (2) containing a polyolefin-based resin, and a surface protective layer (3) containing a thermosetting resin and provided on a front surface (2a) side of the transparent resin layer (2). Further, an uneven pattern (4) is provided on a front surface (3a) of the surface protective layer (3). A percentage of a surface waviness of the decorative sheet (1) after molding to a surface waviness of the decorative sheet (1) before molding, which is defined as a residual embossing ratio, is 30% or more; and an absolute value of a difference between a gloss of a surface of the decorative sheet (1) before molding and a gloss of the surface of the decorative sheet (1) after molding, which is defined as a gloss difference, is less than 5%.

FIG.1

EP 3 960 418 A1

**Description**

[Technical Field]

The present invention relates to a decorative sheet.

[Background Art]

Conventionally, decorative molded products in which decorative sheets are laminated on the surface of resin molded articles have been widely used for interior and exterior materials of vehicles and interior materials of construction materials in order to impart design to the resin molded articles. Thermoplastic resins, such as polymethyl methacrylate (PMMA) resin, are generally used as the materials of such decorative sheets for easy thermal molding (see, for example, PTL 1).

[Citation List]

[Patent Literature]

PTL 1: JP 3998953 B

[Summary of the Invention]

[Technical Problem]

However, if a resin sheet of a thermoplastic resin having excellent formability, such as PMMA resin, is used as the decorative sheet disclosed in PTL 1, there is a possibility that an uneven pattern or a matte texture applied to the surface of the decorative sheet may be lost due to heat and pressure during molding. In particular, when an injection molding method is employed as the molding method, the shape inside the mold is transferred to the surface of the decorative sheet. Accordingly, in order to apply an uneven pattern or a satin finish to the surface of a decorative molded product, it is necessary to prepare a special mold to which the uneven pattern or the satin finish is previously applied. Such decorative sheets are also required to have improved chemical resistance.
The present invention was made in view of the above problems, and an object of the present invention is to provide a decorative sheet that can maintain an uneven pattern and a matte appearance on the sheet surface even after molding, and that has excellent formability and chemical resistance.

[Solution to Problem]

In order to achieve the above object, a summary of an embodiment of the present invention is a decorative sheet comprising (a) a transparent resin layer containing a polyolefin based resin, and (b) a surface protective layer containing a thermosetting resin and provided on a front surface side of the transparent resin layer, (c) an uneven pattern being provided on a front surface of the surface protective layer, wherein (d) a percentage of a surface waviness of the decorative sheet after molding to a surface waviness of the decorative sheet before molding, which is defined as a residual embossing ratio, is 30% or more; and an absolute value of a difference between a gloss of a surface of the decorative sheet before molding and a gloss of the surface of the decorative sheet after molding, which is defined as a gloss difference, is less than 5%.

[Advantageous Effects of the Invention]

According to one embodiment of the present invention, it is possible to provide a decorative sheet that can maintain an uneven pattern and a matte texture on the surface of the decorative sheet even after molding, and that has excellent formability and chemical resistance.

[Brief Description of the Drawing]

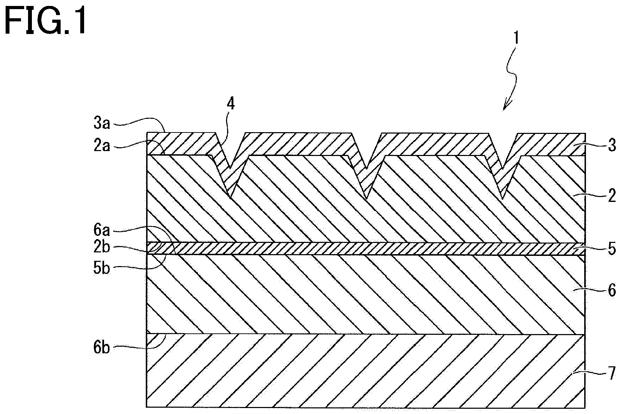

Fig. 1 is a cross-sectional view showing a decorative sheet according to an embodiment of the present invention.

[Description of the Embodiments]

Hereinafter, a decorative sheet according to an embodiment of the present invention will be described with reference to the drawing. The present invention is not limited to the following embodiments. Design modifications can be made on the basis of the knowledge of a person skilled in the art, and such modifications are also included in the scope of the present invention. In addition, the drawing is exaggerated as appropriate to facilitate understanding.

(Configuration)

As shown in Fig. 1, the decorative sheet 1 according to an embodiment of the present invention comprises a transparent resin layer 2, and a surface protective layer 3 provided on a front surface 2a side of the transparent resin layer 2. Further, an uneven pattern 4 is provided on a front surface 3a of the surface protective layer 3.

(Transparent resin layer)

As the material of the transparent resin layer 2, for example, a polyolefin-based resin can be used in terms of processability, economic efficiency, and the like. The polyolefin-based resin may be, for example, a polypropylene based resin, a polyethylene-based resin, or the like. The most suitable polyolefin-based resins for general use are polypropylene based resins, that is, a homopolymer or copolymer containing propylene as the main component. For example, a homopolypropylene resin, a random polypropylene resin, a block polypropylene resin, or the like may be used alone or appropriately mixed, and resins obtained by appropriately further mixing atactic polypropylene with these resins may be used. In addition, a copolymer containing an olefin-based monomer other than propylene, such as an $\alpha$-olefin other than propylene having 2 to 20 carbon atoms and having a polypropylene crystal portion can be used, and a propylene-$\alpha$-olefin copolymer containing 15 mol% or more of one or more types of comonomers among ethylene, 1-butene, 4-methyl-1-pentene, 1-hexene, and 1-octene can be preferably used. Also, a modifier that is typically used for softening polypropylene-based resins, such as low-density polyethylene, an ethylene-$\alpha$-olefin copolymer, ethylene-propylene copolymer rubber, ethylene-propylene-nonconjugated diene copolymer rubber, a styrene-butadiene copolymer, or a hydrogenated product thereof, can be added as appropriate.

Moreover, the thickness of the transparent resin layer 2 is preferably 50 $\mu$m or more and 144 $\mu$m or less.

(Surface protective layer)

The surface protective layer 3 is a layer for protecting the surface of the decorative sheet 1. The surface protective layer 3 is made of, for example, a thermosetting resin. Examples of thermosetting resins that can be used include acrylic urethane-based resins and fluororesins. Examples of acrylic urethane-based resins that can be used include a reaction product obtained by using an acrylic polyol compound as a main agent, and an isocyanate compound as a curing agent. Moreover, an ionizing radiation curable resin may be contained as long as it does not impair the formability of the present invention. Examples of ionizing radiation curable resins that can be used include a composition containing at least one of a prepolymer, oligomer, or monomer having a polymerizable unsaturated bond such as a (meth)acryloyl group, which has the property of undergoing a crosslinking reaction upon irradiation with ionizing radiation. Further, examples of the ionizing radiation that can be used include an electron beam and ultraviolet light. Moreover, examples of fluororesins that can be used include polyvinylidene fluoride, tetrafluoroethylene resins, tetrafluoroethylene-perfluoroalkoxy vinyl ether copolymers, tetrafluoroethylene-hexafluoropropylene copolymers, polychlorotrifluoroethylene, tetrafluoroethylene-ethylene copolymers, chlorotrifluoroethylene-ethylene copolymers, and polyvinyl fluoride (PVF). In particular, it is most desirable to use polyvinylidene fluoride as the fluororesin, in terms of chemical resistance.

(Uneven pattern)

The uneven pattern 4 is a pattern for imparting a three-dimensional design to the decorative sheet 1. The uneven pattern 4 is not particularly limited, and the same patterns as those used for the surface protective layer in a conventional decorative sheet can be used. Examples of patterns that can be used include wood grain vessel patterns, stone grain patterns, cloth fiber patterns, abstract patterns, Japanese paper patterns, suede patterns, leather patterns, and pear-skin patterns. The uneven pattern 4 can be formed, for example, by a doubling embossing method, an extrusion lamination simultaneous embossing method, or the like.

(Other layers)

In addition to the transparent resin layer 2 and the surface protective layer 3, the decorative sheet 1 may appropriately comprise, for example, a pattern layer 5, a solid layer 6, and a substrate layer 7, as with conventional decorative sheets. The pattern layer 5 is provided on a rear surface 2b side of the transparent resin layer 2. The solid layer 6 is provided on a rear surface 5b side of the pattern layer 5. The substrate layer 7 is provided on a rear surface 6b side of the solid layer 6. In Fig. 1, the pattern layer 5, the transparent resin layer 2, and the surface protective layer 3 are laminated in this order on a front surface 6a of the solid layer 6. Further, the substrate layer 7 is laminated on the rear surface 6b of the solid layer 6.

(Pattern layer)

The pattern layer 5 is a layer that is provided as necessary to impart design to the decorative sheet 1 by a pattern. The pattern layer 5 is formed using printing ink, a coating agent, or the like. The printing ink or the like is not particularly limited, and the same printing inks as those used for the pattern layer in a conventional decorative sheet can be used. For example, an acrylic ink can be used as the printing ink or the like. Examples of acrylic inks that can be used include two-component curable urethane resin-based inks obtained by mixing an acrylic polyol-based vehicle with an isocyanate curing agent. Furthermore, examples of printing methods that can be used include gravure printing and offset printing. The pattern is not particularly limited, and the same patterns as those used for the pattern layer in a conventional decorative sheet can be used. For example, a pattern synchronized with the uneven pattern 4 can be used. Specific examples include wood grain patterns, stone grain patterns, cloth fiber patterns, cork patterns, abstract patterns, geometric patterns, and the like.

(Solid layer)

The solid layer 6 is a layer that is provided as necessary to improve the designability of the pattern of the pattern layer 5. A colored thermoplastic resin can be used as the material of the solid layer 6.

(Substrate layer)

The substrate layer 7 is a layer that is provided as necessary to serve as the base of the decorative sheet 1. Examples the material of the substrate layer 7 that can be used include those containing at least one resin selected from a copolymer synthetic resin of acrylonitrile, butadiene, and styrene (ABS resin), a polyester resin, a polycarbonate (PC) resin, a polypropylene (PP) resin, a mixed resin of a PP resin and a PE resin (PW resin), and a PMMA resin. Examples of ABS resins that can be used include a polymer blend-type material containing a styrene-acrylonitrile copolymer and nitrile rubber (NBR), and a graft-type material obtained by graft copolymerizing styrene and acrylonitrile in the presence of polybutadiene rubber (BR) or styrene-butadiene rubber (SBR) latex. Further, the content ratio of butadiene is preferably 20 mass% or more and 50 mass% or less, for example, from the viewpoint of ease of stretching of the ABS resin. In addition, examples of polyesters that can be used include polytrimethylene terephthalate, polybutylene terephthalate, polyethylene naphthalate, and polybutylene naphthalate.

(Residual embossing ratio)

In the decorative sheet 1 according to the present embodiment, as shown in the following formula (1), the percentage of the surface waviness of the decorative sheet 1 after molding with respect to the surface waviness of the decorative sheet 1 before molding (hereinafter referred to as "residual embossing ratio") is 30% or more. Further, the residual embossing ratio is preferably 40% or more, and more preferably 50% or more. The measurement of surface waviness is carried out using a contact-type surface roughness tester (SJ-410, produced by Mitutoyo Corporation).

$$\text{Residual embossing ratio } [\%] = \text{surface waviness after molding/surface waviness before molding} \times 100 \geq 30\% \quad \dots\dots (1)$$

Here, "surface waviness" is an amount using arithmetic average waviness Wa as a parameter.

(Gloss difference)

In the decorative sheet 1 according to the present embodiment, as shown in the following formula (2), the absolute value of the difference between the gloss of the surface of the decorative sheet before molding and the gloss of the surface of the decorative sheet after molding (hereinafter referred to as "gloss difference") is less than 5%. Further, the gloss difference is preferably less than 3%, and more preferably less than 1%. The measurement of gloss is carried out using a glossmeter with an incident angle of 60°.

$$\text{Gloss difference} = |(\text{gloss before molding}) - (\text{gloss after molding})| < 5\%$$

$$\ldots\ldots (2)$$

(Method for producing decorative molded product)

By laminating the decorative sheet 1 according to the present embodiment on a resin molded product, a decorative molded product decorated with the resin molded product can be produced. Examples of the method for producing a decorative molded product that can be used include an injection molding method and a TOM (three dimension overlay method) molding method. For example, the injection molding method is a method for producing a decorative molded product in such a manner that using a preforming mold, the decorative sheet 1 is heated to 130°C and preformed by air pressure forming, then the preformed decorative sheet 1 is trimmed, the trimmed decorative sheet 1 is fitted into an injection molding die, and a resin is injected into the back side of the decorative sheet 1 to integrate the resin (resin molded article) and the decorative sheet 1. Further, the TOM molding method is a method for producing a decorative molded product in such a manner that a resin molded article to be decorated, the decorative sheet 1, and a receiving jig are set in a case, after a vacuum is formed, the temperature of the decorative sheet 1 is raised to a set value by a heater, and after the temperature rise is completed, molding is performed by applying a pressure of 0.3 MPa, and after then cooling in the air, the decorative molded product is removed from the receiving jig of the mold.

Since the injection molding method is a method of integrating the decorative sheet 1 with a resin by injecting the resin, the resulting molded product (decorative molded product) consists of the resin. On the other hand, since the TOM molding method is a secondary decoration method that decorates the base material (resin molded article), it can decorate metals and other materials in addition to resins, and the resulting molded product (decorative molded product) can be composed of materials other than the resin. Moreover, in the TOM molding method, the mold does not contact the surface of the decorative sheet 1, and thus this method is less likely to lose the surface texture than the injection molding method.

As described above, the decorative sheet 1 according to the present embodiment comprises a transparent resin layer 2 containing a polyolefin-based resin, and a surface protective layer 3 containing a thermosetting resin and provided on a front surface 2a side of the transparent resin layer 2. Further, an uneven pattern 4 is provided on a front surface 3a of the surface protective layer 3. Then, the residual embossing ratio is 30% or more, which is the percentage of the surface waviness of the decorative sheet 1 after molding with respect to the surface waviness of the decorative sheet 1 before molding, and the gloss difference is less than 5%, which is the absolute value of the difference between the gloss of the surface of the decorative sheet 1 before molding and the gloss of the surface of the decorative sheet 1 after molding. Therefore, it is possible to provide a decorative sheet 1 that can maintain an uneven pattern and a matte texture on the surface of the decorative sheet even after molding, and that has excellent formability and chemical resistance.

Further, in the decorative sheet 1 according to the present embodiment, the polyolefin-based resin is preferably a polypropylene based resin. Processability and cost-effectiveness can be thereby improved.

Further, in the decorative sheet 1 according to the present embodiment, the thermosetting resin is preferably a fluororesin. Chemical resistance can be thereby further improved.

Further, in the decorative sheet 1 according to the present embodiment, a pattern layer 5 is provided on a rear surface 2b side of the transparent resin layer 2. Therefore, the pattern can impart designability to the decorative sheet 1.

Further, in the decorative sheet 1 according to the present embodiment, a substrate layer 7 is provided on the rear surface 2b side of the transparent resin layer 2. Therefore, the strength of the decorative sheet 1 can be further improved.

Further, in the decorative sheet 1 according to the present embodiment, the substrate layer 7 contains at least one resin selected from a copolymer synthetic resin of acrylonitrile, butadiene, and styrene (ABS resin), a polyester resin, a polycarbonate resin, a polypropylene resin, a PW resin, and a PMMA resin. Therefore, processability and economic efficiency can be improved.

Examples

Hereinafter, Examples and Comparative Examples of the decorative sheet 1 according to the present embodiment will be described. Note that the present invention is not limited to the Examples described below.

(Example 1)

First, a polypropylene film (produced by Riken Technos Corporation) was prepared as a solid layer 6. The thickness of the polypropylene film was 60 $\mu$m. Then, a pattern layer 5 was formed by gravure printing on one surface of the polypropylene film. Then, clear polypropylene was melted and formed into a film with a T-die on the surface of the pattern layer 5, and cooled and solidified by a cooling roll with an uneven embossed shape, thereby laminating a transparent resin layer 2 to which an uneven pattern 4 was transferred. Then, an acrylic urethane resin was applied to the surface of the transparent resin layer 2 to which the uneven pattern 4 was transferred, thereby forming a surface protective layer 3. The coating amount of the acrylic urethane resin was 6 g/m². Furthermore, the thickness of the surface protective layer 3 was 75 $\mu$m. Then, the other surface of the polypropylene film was bonded together with an ABS resin film as a substrate layer 7. The thickness of the ABS resin film was 300 $\mu$m. Thus, the decorative sheet 1 of Example 1 was prepared.

Then, the produced decorative sheet 1 was laminated on a resin molded article by an injection molding method to thereby prepare the decorative molded product of Example 1, which was obtained by decorating the resin molded article.

(Example 2)

In Example 2, a decorative molded product was prepared using a TOM molding method. Otherwise, the decorative sheet 1 and the decorative molded product were prepared using the same conditions as in Example 1.

(Example 3)

In Example 3, a polyethylene (PE) resin was used as the transparent resin layer 2. Otherwise, the decorative sheet 1 and the decorative molded product were prepared using the same conditions as in Example 1.

(Example 4)

In Example 4, a polyvinylidene fluoride (PVDF) resin was provided as the surface protective layer 3. Otherwise, the decorative sheet 1 and the decorative molded product were prepared using the same conditions as in Example 1.

(Comparative Example 1)

In Comparative Example 1, a PMMA resin was used as the transparent resin layer 2. Otherwise, the decorative sheet 1 and the decorative molded product were prepared using the same conditions as in Example 1.

(Comparative Example 2)

In Comparative Example 2, a UV curable resin was used as the surface protective layer 3. Otherwise, the decorative sheet 1 and the decorative molded product were prepared using the same conditions as in Example 1.

(Performance evaluation)

The following performance evaluation was performed on the decorative sheets 1 and decorative molded products of Examples 1 to 4 and Comparative Examples 1 and 2.

(Formability test)

In the formability test, the appearance of the decorative molded product was visually observed and evaluated. Then, cases where no whitening or cracking occurred were classified as a pass "excellent," cases where whitening or cracking slightly occurred but was not a practical problem were classified as a pass "good," and cases where obvious whitening or cracking occurred were classified as a failure "poor."

(Residual embossing ratio test)

In the residual embossing ratio test, the surface waviness of the decorative sheet 1 was measured before and after molding using a contact-type surface roughness tester (SJ-410, produced by Mitutoyo Corporation), and its change rate was calculated according to the formula (1) described above. Then, a score of 30% or more was classified as a pass "excellent," a score of less than 30% and 20% or more was classified as a pass "good," and a score of less than 20% was classified as a failure "poor."

(Gloss difference test)

In the gloss difference test, the gloss of the surface of the decorative sheet 1 was measured before and after molding using a glossmeter with an incident angle of 60°, and its difference was calculated according to the formula (2) described above. Then, a change rate of less than 5% was classified as a pass "excellent," and a change rate of 5% or more was classified as a failure "poor."

(Stain resistance test)

In the stain resistance test, a sunscreen (Ultra Sheer SPF 100, produced by Neutrogena) was applied to the decorative sheet 1 and then allowed to stand in an environment at 80°C for 24 hours, after which the sunscreen was wiped off with a dry cloth, and the state of the surface of the decorative sheet 1 was observed. Then, cases where there was no change in the appearance were classified as a pass "excellent," cases where there was a slight change in the appearance but no problem in practical use were classified as a pass "good," and cases where there was an obvious change in the appearance were classified as a failure "poor."

(Evaluation results)

The evaluation results are shown in Tables 1 and 2 below.

[Table 1]

|  | Example 1 | Example 2 | Example 3 |
|---|---|---|---|
| Transparent resin layer | Polypropylene resin | Polypropylene resin | Polyethylene resin |
| Surface protective layer | Acrylic urethane resin | Acrylic urethane resin | Acrylic urethane resin |
| Molding method | Injection molding method | TOM molding method | Injection molding method |
| Formability | Excellent | Excellent | Excellent |
| Chemical resistance (sunscreen) | Good | Good | Good |
| Residual embossing ratio | Excellent | Excellent | Good |
| Gloss difference | Excellent | Excellent | Excellent |
| Overall evaluation | Excellent | Excellent | Excellent |

[Table 2]

|  | Example 4 | Comparative Example 1 | Comparative Example 2 |
|---|---|---|---|
| Transparent resin layer | Polypropylene resin | PMMA resin | Polypropylene resin |
| Surface protective layer | PVDF resin | Acrylic urethane resin | UV curable resin |
| Molding method | Injection molding method | Injection | Injection |
| Formability | Excellent | Excellent | Poor |
| Chemical resistance (sunscreen) | Excellent | Excellent | Excellent |
| Residual embossing ratio | Excellent | Poor | Excellent |
| Gloss difference | Excellent | Excellent | Excellent |
| Overall evaluation | Excellent | Poor | Poor |

As shown in Tables 1 and 2, the decorative sheets 1 of Examples 1 and 2 were classified as a pass "excellent" in the formability test, the residual embossing ratio test, and the gloss difference test. Since the surface protective layer 3 was an acrylic urethane resin, whose chemical resistance was lower than that of the PVDF resin used in Example 4, there was a slight change in the appearance in the chemical resistance test, but there were no problems in use, and these decorative sheets were classified as a pass "good." Thus, these decorative sheets were classified as a pass "excellent" in the overall evaluation. Further, in the decorative sheet 1 of Example 3, the transparent resin layer 2 was a polyethylene resin, whose heat resistance was slightly lower than that of the polypropylene resin used in Example 1. Accordingly, in the residual embossing ratio test, there was a slight change in the appearance, but there were no problems in use, and this decorative sheet was classified as a pass "good." Thus, this decorative sheet was classified as a pass "excellent" in the overall evaluation. Moreover, the decorative sheet 1 of Example 4 was classified as a pass "excellent" in all of the formability test, the chemical resistance test, the residual embossing ratio test, and the gloss difference test, because the surface protective layer 3 was a PVDF resin. Thus, this decorative sheet was classified as a pass "excellent" in the overall evaluation.

On the other hand, the decorative sheet 1 of Comparative Example 1 was classified as a pass "excellent" in the formability test, the chemical resistance test, and the gloss difference test, but was classified as a failure "poor" in the residual embossing ratio test because the transparent resin layer 2 was a PMMA resin, and the heat resistance was lower. Thus, this decorative sheet was classified as a failure "poor" in the overall evaluation. Further, the decorative sheet 1 of Comparative Example 2 was classified as a pass "excellent" in the chemical resistance test, the residual embossing ratio test, and the gloss difference test, but was classified as a failure "poor" in the formability test because the surface protective layer 3 was a UV curable resin, and the formability was lower. Thus, this decorative sheet was classified as a failure "poor" in the overall evaluation. These results confirmed that the decorative sheets 1 of Examples 1 to 4 could maintain an uneven pattern and a matte texture on the sheet surface even after molding, and had superior formability and chemical resistance, compared with the decorative sheets 1 of Comparative Examples 1 and 2.

[Reference Signs List]

1 Decorative sheet
2 Transparent resin layer
2a Front surface of transparent resin layer
2b Rear surface of transparent resin layer
3 Surface protective layer
3a Front surface of surface protective layer
4 Uneven pattern
5 Pattern layer
5b Rear surface of pattern layer
6 Solid layer
6a Front surface of solid layer
6b Rear surface of solid layer
7 Substrate layer

**Claims**

1. A decorative sheet comprising:

   a transparent resin layer containing a polyolefin-based resin; and
   a surface protective layer containing a thermosetting resin and provided on a front surface side of the transparent resin layer,
   an uneven pattern being provided on a front surface of the surface protective layer, wherein:

   a percentage of a surface waviness of the decorative sheet after molding to a surface waviness of the decorative sheet before molding, which is defined as a residual embossing ratio, is 30% or more; and
   an absolute value of a difference between a gloss of a surface of the decorative sheet before molding and a gloss of the surface of the decorative sheet after molding, which is defined as a gloss difference, is less than 5%.

2. The decorative sheet according to claim 1, wherein the polyolefin-based resin is a polypropylene based resin.

3. The decorative sheet according to claim 1 or 2, wherein the thermosetting resin is a fluororesin.

4. The decorative sheet according to any one of claims 1 to 3, further comprising a pattern layer on a rear surface side of the transparent resin layer.

5. The decorative sheet according to any one of claims 1 to 4, further comprising a substrate layer on a rear surface side of the transparent resin layer.

6. The decorative sheet according to claim 5, wherein the substrate layer contains at least one resin selected from a copolymer synthetic resin of acrylonitrile, butadiene, and styrene (ABS resin), a polyester resin, a polycarbonate resin, a polypropylene resin, a PW resin, and a PMMA resin.

# FIG.1

# EP 3 960 418 A1

## INTERNATIONAL SEARCH REPORT

| | International application No. |
|---|---|
| | PCT/JP2020/017211 |

### A. CLASSIFICATION OF SUBJECT MATTER

B29C 45/14(2006.01)i; B32B 27/00(2006.01)i; B32B 27/30(2006.01)i; B32B 27/32(2006.01)i; B32B 3/30(2006.01)i
FI: B32B3/30; B32B27/00 E; B32B27/32 Z; B32B27/30 D; B29C45/14

According to International Patent Classification (IPC) or to both national classification and IPC

### B. FIELDS SEARCHED

Minimum documentation searched (classification system followed by classification symbols)
B29C45/14; B32B1/00-43/00

Documentation searched other than minimum documentation to the extent that such documents are included in the fields searched

| | |
|---|---|
| Published examined utility model applications of Japan | 1922-1996 |
| Published unexamined utility model applications of Japan | 1971-2020 |
| Registered utility model specifications of Japan | 1996-2020 |
| Published registered utility model applications of Japan | 1994-2020 |

Electronic data base consulted during the international search (name of data base and, where practicable, search terms used)

### C. DOCUMENTS CONSIDERED TO BE RELEVANT

| Category* | Citation of document, with indication, where appropriate, of the relevant passages | Relevant to claim No. |
|---|---|---|
| X | WO 2016/159119 A1 (DAINIPPON PRINTING CO., LTD.) 06.10.2016 (2016-10-06) claim 1, paragraphs [0009], [0040], [0044], [0056], [0158] | 1-2, 4-6 |
| Y | claim 1, paragraphs [0009], [0040], [0044], [0056], [0158] | 3 |
| Y | JP 63-114638 A (SAKAE RIKEN KOGYO CO., LTD.) 19.05.1988 (1988-05-19) page 3, upper left column, lines 2-4 | 3 |
| E, A | JP 2020-093508 A (TOPPAN PRINTING CO., LTD.) 18.06.2020 (2020-06-18) claims 1-3, paragraphs [0006], [0012]-[0015], [0022]-[0026] | 1-6 |
| A | JP 2008-087322 A (DAINIPPON PRINTING CO., LTD.) 17.04.2008 (2008-04-17) entire text, all drawings | 1-6 |
| A | JP 2011-136458 A (3M INNOVATIVE PROPERTIES CO.) 14.07.2011 (2011-07-14) entire text, all drawings | 1-6 |

☒ Further documents are listed in the continuation of Box C.    ☒ See patent family annex.

| | | | |
|---|---|---|---|
| * | Special categories of cited documents: | "T" | later document published after the international filing date or priority date and not in conflict with the application but cited to understand the principle or theory underlying the invention |
| "A" | document defining the general state of the art which is not considered to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
|---|---|
| 17 July 2020 (17.07.2020) | 28 July 2020 (28.07.2020) |

| Name and mailing address of the ISA/ | Authorized officer |
|---|---|
| Japan Patent Office | |
| 3-4-3, Kasumigaseki, Chiyoda-ku, | |
| Tokyo 100-8915, Japan | Telephone No. |

Form PCT/ISA/210 (second sheet) (January 2015)

**INTERNATIONAL SEARCH REPORT**

| International application No. |
|---|
| PCT/JP2020/017211 |

C (Continuation).    DOCUMENTS CONSIDERED TO BE RELEVANT

| Category* | Citation of document, with indication, where appropriate, of the relevant passages | Relevant to claim No. |
|---|---|---|
| A | JP 2011-093096 A (TOPPAN COSMO INC.) 12.05.2011 (2011-05-12) entire text, all drawings | 1-6 |
| A | JP 2004-042351 A (DAINIPPON PRINTING CO., LTD.) 12.02.2004 (2004-02-12) entire text, all drawings | 1-6 |

Form PCT/ISA/210 (continuation of second sheet) (January 2015)

**INTERNATIONAL SEARCH REPORT**

Information on patent family members

International application No.

PCT/JP2020/017211

| Patent Documents referred in the Report | Publication Date | Patent Family | Publication Date |
|---|---|---|---|
| WO 2016/159119 A1 | 06 Oct. 2016 | US 2018/0043653 A1 claims 1, 16, paragraphs [0009], [0105], [0109], [0121], [0123], [0223] EP 3278982 A1 CN 107405891 A KR 10-2017-0134961 A | |
| JP 63-114638 A | 19 May 1988 | (Family: none) | |
| JP 2020-093508 A | 18 Jun. 2020 | (Family: none) | |
| JP 2008-087322 A | 17 Apr. 2008 | (Family: none) | |
| JP 2011-136458 A | 14 Jul. 2011 | US 2012/0280426 A1 WO 2011/081994 A1 EP 2519391 A1 CN 102686377 A KR 10-2012-0099129 A BR 112012015964 A | |
| JP 2011-093096 A | 12 May 2011 | (Family: none) | |
| JP 2004-042351 A | 12 Feb. 2004 | (Family: none) | |

Form PCT/ISA/210 (patent family annex) (January 2015)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 3998953 B